# EUROPÄISCHE PATENTSCHRIFT

(11) **EP 3 947 959 B1**
(45) Veröffentlichungstag und Bekanntmachung des Hinweises auf die Patenterteilung: **23.07.2025**
(21) Anmeldenummer: 20717567.0
(22) Anmeldetag: 27.03.2020
(51) Int. Cl.: F03D 1/06, B29C 65/52, F03D 80/00

(54) **ANORDNUNG, VERFAHREN UND WERKZEUG ZUM BEFESTIGEN VON BAUTEILEN**
ASSEMBLY, METHOD, AND TOOL FOR SECURING COMPONENTS
AGENCEMENT, PROCÉDÉ ET OUTIL POUR LA FIXATION DE PIÈCES

(30) Priorität: 28.03.2019 DE 102019002215; 01.04.2019 DE 102019002372
(43) Veröffentlichungstag der Anmeldung: 09.02.2022
(73) Patentinhaber: ADC Connection Solutions GmbH, 73765 Neuhausen auf den Fildern (DE)
(72) Erfinder: HEYDLAUFF, Wolfgang, 73669 Lichtenwald (DE); LEHMANN, Jan, 72138 Kirchentellinsfurt (DE)
(74) Vertreter: Spachmann, Holger
(86) Internationale Anmeldenummer: PCT/EP2020/058698
(87) Internationale Veröffentlichungsnummer: WO 2020/193753

(56) Entgegenhaltungen:
- EP-A1- 2 138 716
- EP-A1- 3 390 811
- EP-A2- 2 728 171
- EP-B1- 3 390 811
- WO-A1-2012/172132
- WO-A1-2017/101944
- US-A1- 2010 209 651
- US-A1- 2017 050 372

## Beschreibung

Die vorliegende Erfindung betrifft eine Anordnung und ein Verfahren zum Befestigen eines Bauteils. Sie betrifft Befestigungselemente bei der ein Insert in ein vorgefertigtes Loch eines Bauteils eingeklebt wird, insbesondere zum Befestigen eines Gewindebolzens in einem Rotorblatt einer Windkraftanlage.

Daneben betrifft die Erfindung ein Werkzeug und ein Verfahren zur Montage des Inserts. Das Insert wird in ein vorgefertigtes Loch eines Bauteils eingesetzt und mit dem Bauteil verklebt. Das Werkzeug ermöglicht eine lageunabhängige Montage.

Die Erfindung kann auf allen Gebieten der Technik angewendet werden, in denen Bauteile miteinander verbunden werden. Hauptsächlich kann sie zur Anwendung kommen, wenn Bauteile unterschiedlicher Steifigkeiten sicher miteinander verbunden werden sollen. Dies trifft unter anderem auf die Verbindung von Faserverbundbauteilen oder mineralischen Bauteilen mit Metallbauteilen zu.

Insbesondere kann die Erfindung im Bereich von Windkraftanlagen angewendet werden. Ein Rotorblatt besteht oftmals aus glasfaserverstärkten Verbundwerkstoffen, meistens Epoxidharz mit eingebetteten Glasfasern (GFK). Teils wird auch kohlenstofffaserverstärkter Kunststoff (CFK) verwendet. Weil sich die Hybridwerkstoffe durch den Materialmix als Verbund besonders gut an die jeweiligen Anforderungen anpassen lassen, werden sie in den letzten Jahren immer häufiger genutzt. Allerdings ist eine sichere und dauerhafte Befestigung des Rotorblatts aufgrund der Besonderheit des Verbundwerkstoffs an eine Nabe der Windkraftanlage mit besonderen Herausforderungen verbunden. Hierzu sind an einem Rotorblatt eine Vielzahl von in der Regel gleichmäßig beabstandete Gewindebolzen als Insert an der Rotorblattwurzel kreisförmig angeordnet, die in im Wesentlichen zur Längsachse des Rotorblatts erstreckenden Ausnehmungen des Rotorblatts befestigt, insbesondere eingeklebt sind, und die zum Anschluss des Rotorblatts an eine Rotornabe einer Windenergieanlage dienen.

### STAND DER TECHNIK

Inserts die in Bauteile eingesetzt werden gibt es unter anderem für Rotorblätter von Windkraftanlagen. Sie sind detailliert in den Patenten US 4420354 oder US 4915590 beschrieben. Ein Gewindebolzen und ein Insert übertragen die Kräfte zwischen zwei Komponenten, beispielsweise zwischen einer Rotorblattwurzel eines Rotorblatts einer Windkraftanlage und einer Nabe der Windkraftanlage.

Die Montage des Inserts kann wie in Patent WO 002012172132 mittels Vakuuminfusion erfolgen. Dazu wird nach Stand der Technik ein Einlass für das Klebemittel an einer Stelle des Inserts sowie an anderer Stelle des Inserts ein Auslass für die Luft die sich im Klebespalt befindet verwendet.

Eine Schwachstelle der oben beschriebenen Montage ist, dass Lufteinschlüsse im Spalt zwischen Insert und Bohrung zurückbleiben können. Diese Lufteinschlüsse führen zu einer Reduktion der Festigkeit der Verbindung.

Außerdem muss bei der bisherigen Montage die Lage des Bauteils genau eingehalten werden um Lufteinschlüsse zu reduzieren.

Des Weiteren ist eine nachteilige Schwachstelle im Stand der Technik dieser Verbindungsart der Bereich an der Vorderseite des Inserts. In diesem Bereich bilden sich aufgrund der Steifigkeitsunterschiede zwischen Insert, Klebemittel und Bauteil Spannungsspitzen. Diese Spannungsspitzen führen unter Extremlasten bzw. Wechsellasten zuerst zu Rissen und später zum Versagen des Bauteils. Als Lösung hierfür wird bis jetzt zum Beispiel wie in Patent DE 602004008070 dargestellt der Auslauf des Inserts sehr spitz gestaltet. Allerdings führt dies wiederum nachteilig zu einer größeren Bauteillänge und entsprechend höherem Gewicht und höheren Kosten.

In der WO 2017/101944 A1 ist ein Verbindungsgelenk zum Befestigen eines Windturbinenblatts an einer Rotornabe dargestellt.

In der US 2010/0209651 A1 ist ein Verfahren zur Herstellung einer Verbindungsstruktur durch vakuumunterstützes Spritzpressen gezeigt.

Die EP 2 138 716 A1 stellt einen Blatteinsatz dar, der in einem festen Laminat eines Rotorblatts einer Windkraftanlage gekoppelt ist. Der Blatteinsatz umfasst einen als Insert ausgebildeten Blatteinsatzkörper, der mit dem Laminat durch eine haftfesten Doppelaufnahmeverbindung mittels Klebstoff verbunden ist. Hierzu weist das Insert einen stirnseitigen, verjüngenden Hohlkonus auf, und das Loch im Rotorblatt eine formkomplementäre Aufnahme. Ein Entkopplungselement ist in den Hohlkonus des Inserts und in das Laminat eingebracht. Das Entkopplungselement kann aus einem Material mit einer geringen Steifigkeit bestehen. Dadurch ist eine axiale Kraftübertragung zwischen dem Insert und dem Laminat nur über eine Außenseite des Inserts ableitbar.

In der EP 2 728 171 A2 ist eine Anordnung zum Befestigen eines Inserts in einem Rotorblatt gezeigt. Das Insert kann mittels eines Klebstoffs an einer Innenwandung des Rotorblatts angebracht werden. An einer Spitze des Klebstoffs kann ein Entkopplungselement zur Spannungsreduktion eingesetzt werden.

In der US 2017/0050372 A1 ist eine Abstandshalterklammer für Montage eines Inserts in einem Basisteil gezeigt. Die Abstandshalterklammer stellt einen Puffer zwischen Flächen und einem ersten Ende des Inserts dar. Mit der Abstandshalterklammer wird erreicht, dass Klebkräfte zwischen dem Insert und dem Basisteil in allen Richtungen erhalten bleiben können.

Die WO 2012/172132 A1 stellt einen Spritzdübel dar, der zu einer gleichmäßigen Verbindung zwischen zwei Teilen dient. Der Spritzdübel bewirkt allerdings keine mechanische Kopplung zwischen den beiden Teilen, sondern dient lediglich einer homogenen Verteilung des Klebstoffs.

Aufgabe der vorliegenden Erfindung ist es daher, eine Befestigungsanordnung, ein Befestigungsverfahren und ein hierzu verwendbares Werkzeug vorzuschlagen, die die vorgenannten Nachteile überwinden.

Diese Aufgabe wird durch eine Befestigungsanordnung, ein Befestigungsverfahren und ein Befestigungswerkzeug nach den unabhängigen Ansprüchen gelöst. Vorteilhafte Ausbildungen der Erfindung sind Gegenstand der Unteransprüche.

### OFFENBARUNG DER ERFINDUNG

Erfindungsgemäß wird eine Anordnung zum Befestigen eines Bauteils mittels eines Inserts vorgeschlagen, wobei das Bauteil in einer befestigungsseitigen Stirnseite mindestens ein Loch aufweist, das zur Aufnahme des Inserts ausgebildet ist, das mit einer Vorderseite voran in das Loch eingesetzt ist, wobei ein Zwischenraum zwischen dem Insert 21 und der Innenwandung des Lochs zumindest teilweise mit einem Klebemittel 31 ausgefüllt ist, wobei zwischen dem Insert und der Innenwandung mindestens ein Entkopplungselement zur Reduzierung von Spannungsspitzen eingesetzt ist, dessen Steifigkeit geringer ist als eine Steifigkeit des ausgehärteten Klebemittels.

Gemäß der Erfindung weist das Loch im Bauteil eine Längsachse auf, wobei die Längsachse durch den geometrischen Schwerpunkt des Lochs verläuft, und Teile des Entkopplungselements einen Abstand zur Längsachse aufweisen, der größer ist als der arithmetisch mittlere Außenradius des vorderseitigen Drittels des Inserts ist, so dass das Entkopplungselement eine Vorderseite des Inserts abschirmt und umgelenkte Kräfte an anderen Stellen in das Insert eingeleitet werden.

Das Entkopplungselement ermöglicht eine verbesserte Befestigungsqualität, die synergetisch zusammenwirkt, aber auch als Einzelmaßnahme bereits eine signifikante Erhöhung der Befestigungsqualität bietet. Insoweit können beide Gegenstände sowohl in Kombination, als auch einzeln eingesetzt werden.

Die Erfindung betrifft somit in einem Aspekt Verbindungen die mittels Insert und Bolzen, verschraubt werden und zum Beispiel folgendermaßen aufgebaut sind:
Ein Bauteil ist an einer Halterung befestigt. Die Befestigung besteht aus einem Bolzen, einer Mutter, und einem Insert. Das Insert befindet sich in einem Loch eines Bauteils und ist mit dem Bauteil verklebt. Das Insert ist mit dem Bolzen verschraubt. Der Bolzen befindet sich in einem Durchgangsloch der Halterung. Eine Mutter auf dem Bolzen verspannt die gesamte Verbindung.

Die Erfindung bezieht sich auf die Verklebung von dem Insert mit dem Bauteil. Im Bereich der Vorderseite des Inserts befindet sich ein Entkopplungselement. Das Entkopplungselement reduziert die Kräfte, die an der Vorderseite des Inserts wirken. Die Kräfte werden dadurch an einer niedriger belasteten Stelle in das Insert eingeleitet.

Durch das Entkopplungselement sinken die Spannungen in der Verbindungsanordnung. Deren Festigkeit und Wechselfestigkeit steigt dadurch an.

Verschiedene Ausführungsvarianten des Entkopplungselements ermöglichen die oben beschriebenen Eigenschaften. Das Entkopplungselement kann zum Beispiel aus relativ weichem Material bestehen. Dies kann unter anderem Gummi oder Schaumstoff sein. Das weiche Material kann vergleichsweise geringe Kräfte aufnehmen und somit auch nicht an das Insert weiterleiten.

**In** einer vorteilhaften Ausführungsform kann zusätzlich ein Werkzeug in der Anordnung so eingesetzt sein, dass bei der Montage ein Lufteinschluss zwischen dem Insert und dem Bauteil reduzierbar ist. Das Werkzeug ermöglicht eine verbesserte Befestigungsqualität, die synergetisch zusammenwirkt, aber auch als Einzelmaßnahme bereits eine signifikante Erhöhung der Befestigungsqualität bietet. Insoweit können beide Gegenstände sowohl in Kombination, als auch einzeln eingesetzt werden.

**In** einer vorteilhaften Ausführungsform kann die Steifigkeit des Entkopplungselements um mindestens 20% geringer ist als die durchschnittliche Steifigkeit des ausgehärteten Klebemittels sein, und/oder das Loch im Bauteil Querschnittsflächen besitzen, die senkrecht zur Längsachse des Lochs ausgerichtet sind und die Oberfläche des Entkopplungselements größer ist als 10% der durchschnittlichen Querschnittsfläche des Lochs sein.

**In** einer vorteilhaften Ausführungsform kann die geringere Steifigkeit des Entkopplungselements durch ein Material mit mindestens 20% geringerem Elastizitätsmodul als dem ausgehärteten Klebemittel erreicht werden, und/oder die geringere Steifigkeit des Entkopplungselements durch eine Aussparung des Klebemittels erreicht werden, und/oder die geringere Steifigkeit des Entkopplungselements durch eine Trennschicht mit reduzierter Anhaftung zwischen zwei Bereichen der Konstruktion erreicht werden, und/oder die geringere Steifigkeit des Entkopplungselements durch die Provokation von Rissen zwischen zwei Bereichen der Konstruktion erreicht werden.

In einer vorteilhaften Ausführungsform kann das Entkopplungselement aus mindestens einem Material besteht, und/oder das Entkopplungselement einteilig oder mehrteilig ist, und/oder das Entkopplungselement ein Hohlelement ist, und/oder das Entkopplungselement ein Hohlraum ist. Insoweit kann das Entkopplungselement auch ein Hohlraum oder Hohlkörper sein. Auch dieser unterbindet die Kraftübertragung zwischen der Vorderseite des Inserts und dem Bauteil.

In einer vorteilhaften Ausführungsform kann das Insert zumindest eine Seitenfläche besitzen, die einen Abstand zum Bauteil aufweist, wobei der Befestigungsbereich des Insert derjenige Teil ist, der sich im Bauteil befindet und der arithmetisch mittlere Abstand zwischen der Seitenfläche und dem Bauteil im vorderen Zehntel des Befestigungsbereichs des Insert größer als 10% des arithmetisch mittleren Radius des Befestigungsbereichs des Insert sein kann.

Eine ähnliche Funktion haben Entkopplungselemente die Risse an bestimmten Stellen initiieren oder eine Trennebene zwischen zwei Bereichen der Verbindung darstellen. Das Entkopplungselement könnte zum Beispiel Trennmittel sein, das lokal in das Klebemittel eingebracht wird. Unter Belastung kann über diese Trennschicht ebenfalls keine Zugkraft übertragen werden.

In einer vorteilhaften Ausführungsform kann das Bauteil ein Rotorblatt für Windenergieanlagen sein.

In einem nebengeordneten Aspekt wird ein Verfahren zum Befestigen eines Bauteils mittels einer Anordnung mit einem Insert und einem Entkopplungselement, mit folgenden Arbeitsschritten vorgeschlagen:
- Bereitstellen eines Bauteils mit Loch;
- Bereitstellen eines Inserts;
- Bereitstellen eines Entkopplungselements;
- Einsetzen des Entkopplungselements in das Loch des Bauteils;
- Einsetzen des Inserts in das Bauteil;
- Einbringen eines Klebemittels;
- Aushärten des Klebemittels.

In einer vorteilhaften Ausführungsform kann ein Werkzeug so eingesetzt werden, dass bei der Montage ein Lufteinschluss zwischen dem Insert und dem Bauteil reduziert wird.

In einer vorteilhaften Ausführungsform kann ein Zwischenraum zwischen dem Insert und der Innenwandung des Lochs entstehen, der mit dem Klebemittel gefüllt wird, wobei Luft zur Verklebung verdrängt werden muss und die verdrängte Luft durch mindestens einen Auslass im Bereich der stirnseitigen Hälfte des Lochs und durch mindestens einen Auslass im Bereich der bauteilseitigen Hälfte des Lochs mittels des Werkzeugs entweicht.

In einer vorteilhaften Ausführungsform des Befestigungsverfahrens kann ein vorstehend beschriebenes Entkopplungselements verwendet werden.

In einer vorteilhaften Ausführungsform des Befestigungsverfahrens kann das Bauteil ein Rotorblatt für Windenergieanlagen sein.

In einem weiteren nebengeordneten Aspekt wird ein Werkzeug zur Montage eines Befestigungselements vorgeschlagen. Das Werkzeug wird in Verbindungen eingesetzt, die mittels Insert und Bolzen verschraubt werden und zum Beispiel folgendermaßen aufgebaut sind:
Ein Bauteil ist an einer Halterung befestigt. Die Befestigung besteht aus einem Bolzen, einer Mutter, und einem Insert. Das Insert befindet sich in einem Loch eines Bauteils und ist mit dem Bauteil verklebt. Das Insert ist mit dem Bolzen verschraubt. Der Bolzen befindet sich in einem Durchgangsloch der Halterung. Eine Mutter auf dem Bolzen verspannt die gesamte Verbindung.

Die Erfindung betrifft in einem weiteren Aspekt ein Werkzeug zur Herstellung einer solchen Verbindungsanordnung. Das Werkzeug wird mit dem Insert in das Loch des Bauteils eingesetzt. Dadurch entsteht ein Zwischenraum zwischen Insert, Werkzeug und Bauteil der mit einem Medium wie zum Beispiel Luft gefüllt ist.

Sowohl das oben diskutierte Entkopplungselement als auch das Werkzeug zur Lufteinschlussreduktion erhöhen die Befestigungsqualität, insbesondere bei Befestigung zweier Fügepartner, bei denen zumindest einer aus einem Verbundwerkstoff wie ein Rotorblatt einer Windkraftanlage gefertigt ist. Dabei kann sowohl das Entkopplungselement als auch das Werkzeug in Alleinstellung als auch kombiniert angewendet werden, um synergetisch die Belastungskapazität und Dauerhaftigkeit der Befestigung signifikant zu erhöhen.

Das Werkzeug dient somit zur Montage des Inserts an dem Bauteil, und ermöglicht, dass Luft zwischen Insert und Bauteilloch entfernt werden kann. Dazu befindet sich das Insert in einem Loch im Bauteil. Der Bereich zwischen Insert und Bauteil wird mit einem Klebemittel ausgefüllt.

Beim Einbringen des Klebemittels muss die dort befindliche Luft verdrängt werden. Dabei kann es zu Lufteinschlüssen kommen. Um diese Lufteinschlüsse zumindest teilweise zu verhindern, wird bis jetzt die Lage des Bauteils exakt ausgerichtet oder Lufteinschlüsse zu Lasten der Festigkeit der Verbindung toleriert.

Das vorgeschlagene Werkzeug soll Lufteinschlüsse verhindern und eine lageunabhängige Montage ermöglichen. Es wird vorgeschlagen, dass das Werkzeug mehrere Luftauslässe besitzt, die über die Bohrungstiefe verteilt angeordnet sind. Lufteinschlüsse können so nicht mehr entstehen. Mithilfe von Durchflussregulierungselementen, die den Durchfluss des Klebemittels in den Auslasskanälen unterbinden, wird eine lageunabhängige Montage ermöglicht.

Das Werkzeug kann bei der Verklebung von Inserts zur Anwendung kommen bei denen eine lageunabhängige Montage, eine höhere Prozesssicherheit oder reduzierte Montagezeiten erforderlich sind.

Das Werkzeug besitzt somit zumindest zwei Auslässe durch die das Medium, beim Verkleben des Inserts, entweichen kann. Hierdurch werden Lufteinschlüssen bei beliebiger Einbaulage vermieden. Dies reduziert Ausschuss und vermeidet Nachbearbeitungen. Dabei befinden sich mindestens ein Auslass im Bereich der stirnseitigen Hälfte des Lochs und mindestens ein Auslass im Bereich der bauteilseitigen Hälfte des Lochs.

Verschiedene Ausführungsvarianten des Werkzeugs ermöglichen die oben beschriebenen Eigenschaften. Das Werkzeug kann einteilig oder mehrteilig sein. Das Verschließen der Auslässe durch das Klebemittel kann zum Beispiel durch Membranen, Ablaufsiphons, Drosseln oder Überlaufbehälter verhindert werden.

Zusätzlich kann das Werkzeug zur Ausrichtung oder Zentrierung des Inserts verwendet werden.

So kann in einer vorteilhaften Ausführungsform ein Durchflussregulierungselement beinhaltet sein, wobei dieses zumindest eine Membran, und / oder zumindest einen Ablaufsiphon, und / oder zumindest eine Drossel und /oder zumindest ein und /oder zumindest ein Luftablassventil beinhaltet.

In einer vorteilhaften Ausführungsform kann das Werkzeug das Insert im Loch zentrieren, und / oder das Werkzeug das Insert im Loch ausrichten, und / oder das Werkzeug das Insert zum Bauteil ausrichten, und / oder das Werkzeug das Insert zu anderen Inserts ausrichten

In einer vorteilhaften Ausführungsform kann das Werkzeug ein Heizelement beinhalten.

In einer vorteilhaften Ausführungsform kann das Werkzeug aus mindestens einem Material besteht, und / oder das Werkzeug einteilig oder mehrteilig ausgebildet sein.

In einer vorteilhaften Ausführungsform kann das Werkzeug speziell für ein Bauteil als Rotorblatt für Windenergieanlagen ausgebildet sein.

In einem weiteren nebengeordneten Aspekt wird ein Verfahren zum Befestigen eines Bauteils mittels eines Inserts und eines vorab beschriebenen Werkzeugs mit dem Arbeitsschritten vorgeschlagen:
- Bereitstellen eines Bauteils mit Loch;
- Bereitstellen eines Inserts;
- Bereitstellen des Werkzeugs;
- Einsetzen des Inserts 21 in das Bauteil;
- Einsetzen zumindest eines Teils des Werkzeugs in das Loch des Bauteils;
- Einbringen eines Klebemittels;
- Aushärten des Klebemittels.

In einer vorteilhaften Weiterbildung des Verfahrens kann ein Zwischenraum zwischen dem Insert und der Innenwandung des Lochs vorhanden sein, der mit einem Medium, insbesondere einem Klebemittel gefüllt ist, welches zur Verklebung verdrängt werden muss und das zu verdrängende Medium durch mindestens einen Auslass im Bereich der stirnseitigen Hälfte des Lochs und durch mindestens einen Auslass im Bereich der bauteilseitigen Hälfte des Lochs mittels des Werkzeugs entweicht.

In einer vorteilhaften Weiterbildung des Befestigungsverfahrens mit Hilfe des Werkzeugs kann das Bauteil ein Rotorblatt für Windenergieanlagen sein.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
**Fig. 1** zeigt eine Ausführungsvariante der Verbindungsanordnung 10. Die Anordnung 10 verbindet ein Bauteil 11 mit einer Halterung 18;
**Fig. 2** stellt den aktuellen Stand der Technik dar. Ein Insert 21 befindet sich in einem Loch Fig. 3 / 13 eines Bauteils 11. Ein Klebemittel 31 verbindet das Insert 21 mit dem Bauteil 11. Im Bereich der Vorderseite Fig. 1 / 23 des Inserts 21 entstehen durch die hohe Belastung Risse 100;
**Fig. 3** zeigt das Bauteil 11 mit einer Stirnseite 12 in der sich ein Loch 13 befindet. Das Loch 13 besitzt eine Längsachse 15;
**Fig. 4** ist eine Schnittansicht des Bauteils 11 senkrecht zur Längsrichtung Fig. 3 / 15 des Lochs 13. Im Bauteil 11 befindet sich ein Loch 13. Dieses Loch besitzt eine Querschnittsfläche 14;
**Fig. 5** stellt eine Ausführungsvariante der Verbindungsanordnung 10 dar, wobei das Entkopplungselement eine Trennschicht 51 ist, welche in das Klebemittel 31 eingebracht ist;
**Fig. 6** stellt eine Ausführungsvariante der Verbindungsanordnung 10 dar, wobei das Entkopplungselement provozierte Risse 61 im Bauteil 11 sind;
**Fig. 7** stellt eine Ausführungsform der Verbindungsanordnung im Detail dar;
**Fig. 8** stellt eine Ausführungsvariante einer Ausführungsform 40 des erfindungsgemäßen Werkzeugs dar;
**Fig. 9** stellt eine weitere Ausführungsvariante 50 des Werkzeugs dar;
**Fig. 10** stellt einen Schnitt durch das Bauteil 11 mit einem Loch 13 dar. Das Bauteil besitzt eine Stirnseite 12. Das Loch besitzt eine Längsachse 15;
**Fig. 11** stellt eine weitere Ausführungsform des Werkzeugs 40 dar;
**Fig. 12** zeigt eine Ausführungsform der Verbindungsanordnung 10. Die Anordnung 10 verbindet ein Bauteil 11 mit einer Halterung 18;
**Fig. 13** stellt eine Ausführungsform 60 des Werkzeugs 40 dar;
**Fig. 14** stellt eine weitere Ausführungsform 70 des Werkzeugs 40 dar;
**Fig. 15** stellt eine weitere Ausführungsform 80 des Werkzeugs 40 dar;
**Fig. 16** stellt eine weitere Ausführungsform 90 des Werkzeugs 40)dar;
**Fig. 17** stellt den Prozess des Verklebens als Ausführungsform des erfindungsgemäßen Befestigungsverfahrens dar;
**Fig. 18** stellt den Prozess des Verklebens als weitere Ausführungsform des erfindungsgemäßen Befestigungsverfahrens bei einer Schrägstellung von +45° der Verbindungsanordnung 10 dar;
**Fig. 19** stellt den Prozess des Verklebens als weitere Ausführungsform des erfindungsgemäßen Befestigungsverfahrens bei einer Schrägstellung der Verbindungsanordnung 10 um -45° dar.

In den Figuren sind gleichartige Elemente mit gleichen Bezugszeichen beziffert. Die Figuren zeigen lediglich Beispiele und sind nicht beschränkend zu verstehen.

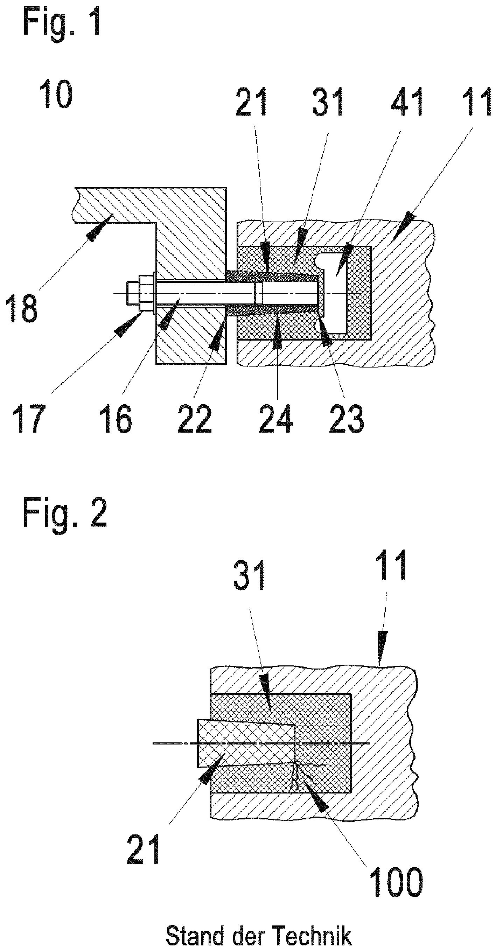

Fig. 1 stellt eine Ausführungsvariante der erfindungsgemäßen Befestigungsanordnung dar. In einem Loch eines Bauteils 11 befindet sich mit der Vorderseite 23 voran ein Insert 21 mit einer Seitenfläche 24. An der Vorderseite 23 des Inserts 21 befindet sich ein Entkopplungselement 41. Der Bereich zwischen dem Bauteil 11, dem Insert 21 und dem Entkopplungselement 41 ist zumindest teilweise mit ausgehärtetem Klebemittel 31 verfüllt. Auf der Rückseite 22 des Inserts 21 liegt eine Halterung 18 auf. In der Halterung 18 befindet sich ein Durchgangsloch für einen Gewindebolzen 16. Der Gewindebolzen 16 ist mit dem Insert 21 verschraubt. Über eine Mutter 17 wird eine Vorspannkraft auf die Verbindung 10 aufgebracht.

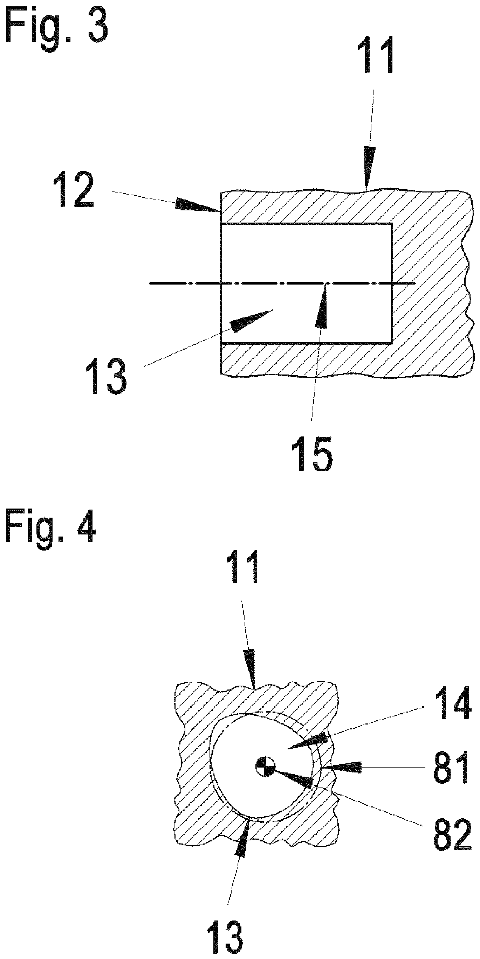

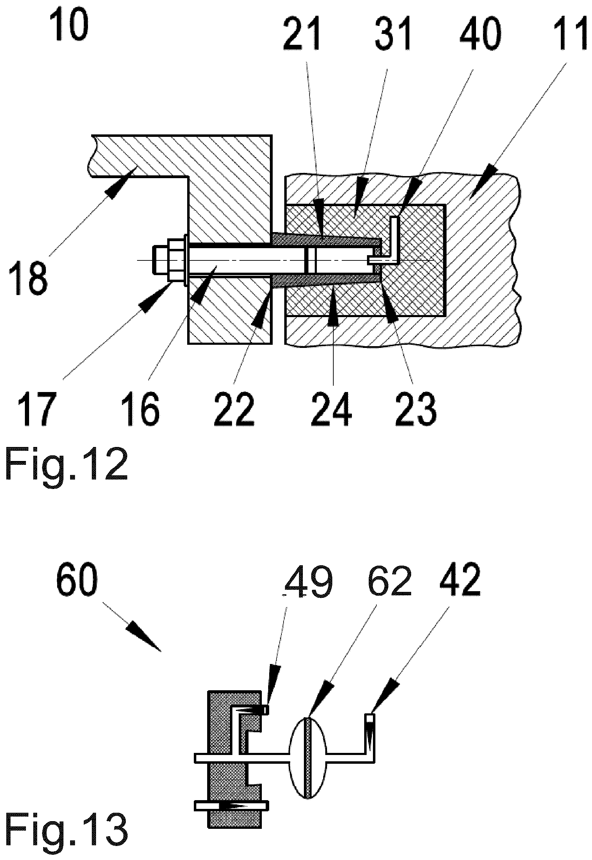

In einem Loch Fig. 3 / 13 des Bauteils 11 befindet sich ein Entkopplungselement 41 und ein Insert 21 mit zumindest einer Seitenfläche 24. Das Insert 21 befindet sich mit der Vorderseite 23 voran im Bauteil 11. Das Entkopplungselement 41 befindet sich im Bereich der Vorderseite 23 des Inserts 21. Klebemittel 31 verbindet Insert 21, Bauteil 11 und Entkopplungselement 41. Über eine Verschraubung ist das Insert 21 mit dem Bolzen 16 verbunden. Der Bolzen 16 befindet sich in einem Durchgangsloch in der Halterung 18. Die Halterung 18 liegt auf der Rückseite 22 des Inserts 21 auf. Über eine Mutter 17 wird eine Vorspannkraft auf die Verbindung 10 aufgebracht.

In dieser Ausführungsvariante besteht das Entkopplungselement 41 aus einem Material, welches eine deutlich geringere Steifigkeit als die des ausgehärteten Klebemittels 31 aufweist. Aufgrund der geringeren Steifigkeit des Entkopplungselements 41 kann dieses kaum Kräfte zwischen Bauteil 11 und der Vorderseite 23 des Inserts 21 übertragen. Das Entkopplungselement 41 schirmt die Vorderseite 23 des Inserts 21 ab. Die hohen Spannungen an der Vorderseite 23 des Inserts 21 sinken. Die umgelenkten Kräfte werden aufgrund des Entkopplungselements 41 an anderen Stellen in das Insert 21 eingeleitet. Auf diese Weise werden die Kräfte gleichmäßiger über die Seitenfläche 24 des Inserts 21 verteilt.

Mehrere Ausführungsvarianten das Inserts 21 sind möglich. Zum Beispiel kann das Insert 21, wie in Fig. 1 dargestellt, ein Innengewinde aufweisen. Das Innengewinde dient zur Aufnahme eines Bolzens 16.

Eine andere Ausführungsvariante ist ein Insert 21 mit einem Außengewinde. Auf dieses Insert 21 kann direkt eine Mutter 17 aufgeschraubt werden. Ein Bolzen 16 entfällt.

Eine weitere Ausführungsvariante eines Inserts 21 ist ein Stab ohne Gewinde. Der Stab wird zum Beispiel mit der Halterung 18 verklebt oder durch einen Querbolzen bzw. einen Splint mit der Halterung 18 verbunden.

In Fig. 1 ragt das Entkopplungselement 41 über die Vorderseite 23 des Inserts 21 hinaus und umschließt die Seitenfläche 24 des Inserts 21 teilweise. Zudem füllt das Entkopplungselement 41 einen Großteil des Lochquerschnitts 14 aus. Beide Eigenschaften führen unabhängig voneinander zu einer besseren Entkopplung des Inserts 21 vom Bauteil 11.

Das Entkopplungselement 41 kann auch ein Hohlraum oder Hohlkörper sein. Der Hohlkörper enthält einschließlich aber nicht ausschließlich ein Gas wie zum Beispiel Luft, eine Flüssigkeit oder ein Vakuum. Der Hohlkörper führt dazu, dass das Entkopplungselement 41 keine Steifigkeit mehr aufweist. Auch diese Anordnung 10 reduziert die Kräfte, die in Richtung der Längsachse 15 auf kürzestem Weg vom Bauteil 11 auf das Insert 21 übertragen werden können. Diese Kräfte werden um das Entkopplungselement 41 herum gelenkt und an anderer Stelle in das Insert 21 eingeleitet. Dadurch reduzieren sich die Spannungsspitzen an der Vorderseite 23 des Inserts 21 und die Festigkeit der Verbindung 10 wird erhöht.

Das Entkopplungselement 41 kann ein- oder mehrteilig sein. Außerdem kann das Entkopplungselement 41 aus einem oder mehreren Materialien bestehen.

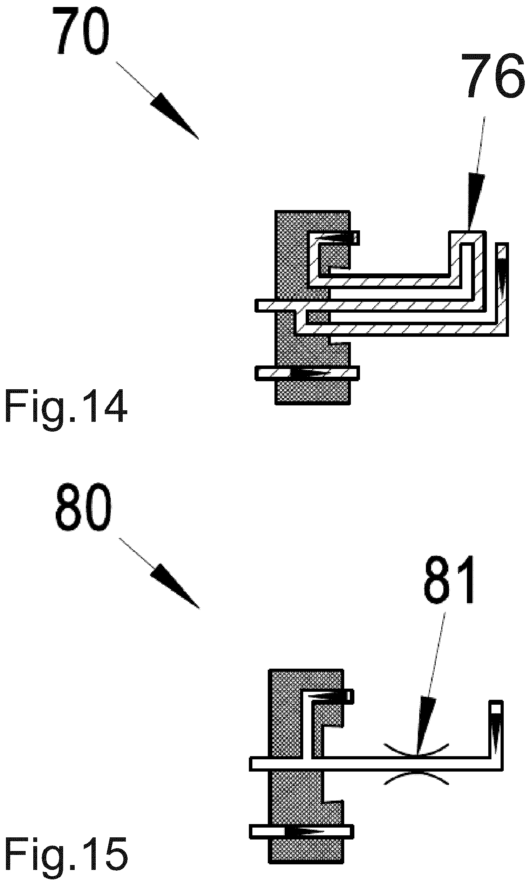

Das in Fig. 1 dargestellte Insert 21 sowie das Loch 13 im Bauteil 11 können auf verschiedenste Arten ausgeformt sein. Deren Querschnitte können zum Beispiel rund oder eckig sein. In Längsrichtung können sich deren Querschnitte beliebig verändern. Zum Beispiel kann das Insert 21 Richtung Vorderseite 23 stumpf, abgerundet oder spitz auslaufen. Zur Beschreibung wird in diesem Patent auf den Durchmesser des Inserts 21 bzw. den Durchmesser des Lochs Fig. 3 / 13 im Bauteil 11 Bezug genommen. Sollten das Insert oder das Loch Fig. 3 / 12 im Bauteil nicht rund sein, entspricht der Durchmesser des nicht runden Querschnitts Fig. 4 / 14 dem Durchmesser eines Referenzkreises Fig. 4 / 81, dessen Fläche der Fläche des nicht runden Querschnitts Fig. 4 / 14 entspricht. Die Flächenschwerpunkte Fig. 4 / 82 des Referenzkreises und des nicht runden Querschnitts Fig. 4 / 14 sind identisch. Bei nicht runden Querschnitten kann das Insert 21 zudem mehrere Seitenflächen 24 besitzen.

Fig. 2 stellt eine Verbindungsanordnung 10 nach bisherigem Stand der Technik dar. Sie besteht aus einem Bauteil 11 und einem Insert 21. Das Insert 21 befindet sich in einem Loch Fig. 3 / 13 des Bauteils 11. Bauteil 11 und Insert 21 sind mit einem Klebemittel 31 verbunden.

Durch die Spannungsüberhöhungen an der Vorderseite Fig. 1 / 23 des Inserts 21 entstehen Risse 100, die zum Versagen der Verbindung 10 führen können.

Fig. 3 stellt einen Schnitt durch das Bauteil 11 mit einem Loch 13 dar. Das Bauteil besitzt eine Stirnseite 12. Das Loch besitzt eine Längsachse 15. Das Loch 13 kann in einem beliebigen Winkel in das Bauteil 11 eingebracht werden. In Fig. 3 ist das Loch 13 senkrecht zur Stirnseite 12 eingebracht.

Fig. 4 ist eine Schnittansicht des Bauteils 11 aus Fig. 3. In dieser Ansicht ist das Loch Fig. 3 / 13 mit dessen Querschnitt 14 zu erkennen. Der Querschnitt 14 kann eine beliebige Form besitzen. Ein Referenzkreis 81 besitzt die gleiche Fläche wie der Querschnitt 14 des Lochs 13. Der Flächenschwerpunkt 82 des Querschnitts 14 und des Referenzkreises 81 sind identisch.

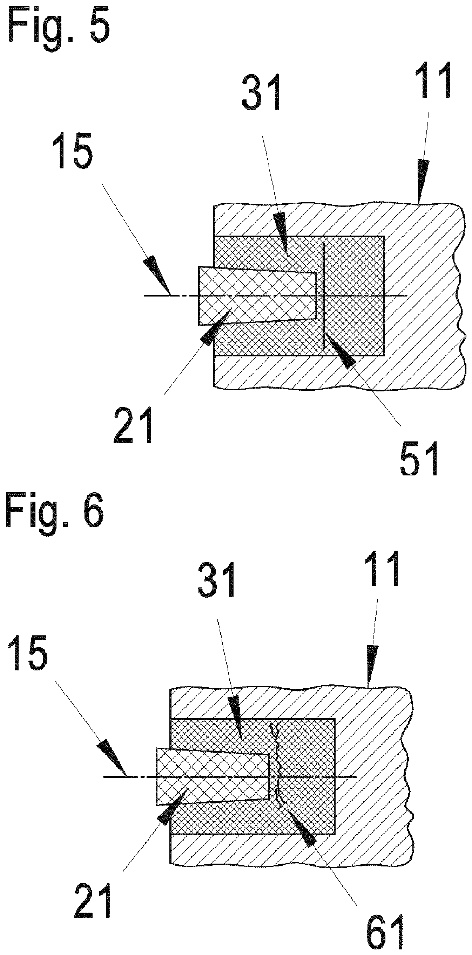

Fig. 5 stellt eine weitere Ausführungsvariante der Erfindung dar. Im Loch Fig. 3 / 13 des Bauteils 11 befindet sich das Insert 21. Bauteil 11 und Insert 21 sind zumindest teilweise mit Klebemittel 31 verbunden. Das Entkopplungselement Fig. 1 / 41 ist eine Trennschicht 51. Diese Trennschicht 51 reduziert oder unterbindet die Kraftübertragung in Richtung der Längsachse 15 der Verbindung 10. Die Trennschicht 51 kann einschließlich aber nicht ausschließlich eine Folie oder ein Trennmittel sein. Die Kräfte werden um die Trennschicht 51 gelenkt und an anderer Stelle in das Insert 21 eingeleitet.

Dadurch reduzieren sich die Spannungsspitzen an der Vorderseite 23 des Inserts 21 und die Festigkeit der Verbindung 10 wird erhöht.

Fig. 6 stellt eine weitere Ausführungsvariante der Erfindung dar. Im Loch Fig. 3 / 13 des Bauteils 11 befindet sich das Insert 21. Bauteil 11 und Insert 21 sind zumindest teilweise mit Klebemittel 31 verbunden. Das Entkopplungselement Fig. 1 / 41 sind provozierte Risse 61 im Klebemittel 31, dem Bauteil 11 oder dem Insert 21. Diese Risse 61 reduzieren oder unterbinden die Kraftübertragung unter anderem in Richtung der Längsachse 15 des Lochs Fig. 3 / 13. Die Risse 61 können einschließlich aber nicht ausschließlich durch Kerben im Klebemittel 31, Kerben an der Innenseite des Lochs Fig. 3 / 13 oder Kerben am Insert 21 hervorgerufen werden.

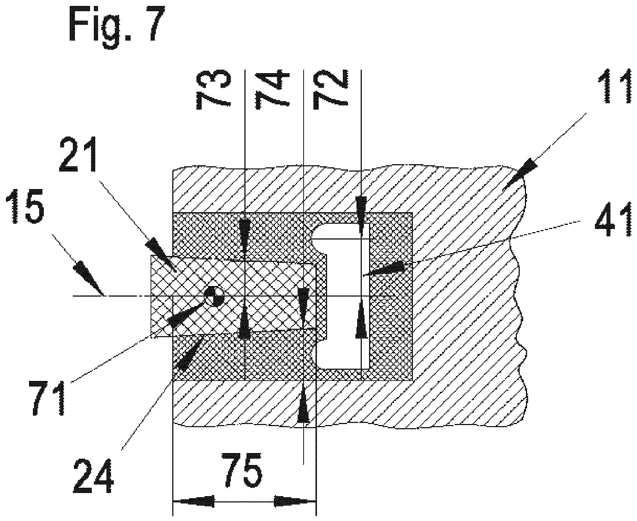

In Fig. 7 ist die Verbindungsanordnung 10 im Detail dargestellt. Das Loch 13 im Bauteil 11 hat einen geometrischen Schwerpunkt 71. Ein Teil des Entkopplungselements 41 hat einen Abstand 72 zur Längsachse 15 des Lochs 13. Das Insert 21 hat einen Außenradius 73. Das Bauteil 11 hat einen Abstand 74 zur Seitenfläche 24 des Inserts 21.

Die Herstellung der Verbindungsanordnung 10 erfolgt zum Beispiel indem ein Loch 13 in ein Bauteil 11 gebohrt wird. Danach wird ein Entkopplungselement 41 in das Bauteil eingesetzt. In einem weiteren Schritt wird ein Insert 21 mit der Vorderseite 23 voran in das Loch eingebracht. Der entstandene Zwischenraum zwischen Bauteil 11, Insert 21 und Entkopplungselement 41 wird mit Klebemittel 31 ausgefüllt. Das Ausfüllen des Zwischenraums kann zum Beispiel per Vakuuminfusion oder Injektion erfolgen. Möglich wäre auch das Klebemittel 31 zuerst in das Loch 13 des Bauteils 11 einzubringen und danach das Entkopplungselement 41 und das Insert 21 in das noch flüssige Klebemittel 31 einzupressen. In einem weiteren Schritt härtet das Klebemittel 31 aus und wird gegebenenfalls getempert. Zum Schluss kann das Insert 21 mithilfe eines Bolzens 16 und einer Mutter 17 an einer Halterung 18 befestigt werden.

Eine Variante der oben beschriebenen Herstellung der Verbindungsanordnung 10 ist das Klebemittel 31 in zwei Schichten einzubringen. Das Loch 13 im Bauteil 11 wird bis kurz vor die Vorderseite 23 des Inserts 21 mit einer ersten Schicht Klebemittel 31 aufgefüllt. Danach härtet die erste Schicht des Klebemittels 31 aus. In einem zweiten Schritt wird das Insert 21 in das Loch 13 des Bauteils 11 eingebracht. Der verbleibende Zwischenraum zwischen Insert 21 und Bauteil 11 wird dann mit einer zweiten Schicht Klebemittel 31 gefüllt. Danach härtet die zweite Schicht des Klebemittels 31 aus. Im Übergangsbereich zwischen erster und zweiter Schicht Klebemittel 31 ist die Anhaftung stark reduziert. Der Übergangsbereich mit reduzierter Anhaftung ist in diesem Fall das Entkopplungselement 41. Bei geringer Belastung entstehen in der Kontaktfläche zwischen den Klebemittelschichten Risse 61. Kräfte können im Übergangsbereich nicht bzw. nur reduziert übertragen werden und die Spannungsüberhöhungen im Bereich der Vorderseite 23 des Inserts 21 werden reduziert.

Eine Variante der oben beschriebenen Herstellung der Verbindungsanordnung 10 ist das Aufbringen eines Trennmittels auf den Bohrlochgrund oder auf eine erste Schicht Klebemittel. Die mit Trennmittel benetzte Oberfläche 51 kann keine Kräfte übertragen und schirmt die Vorderseite 23 des Inserts 21 gegen Kräfte ab.

Ziel des weiterhin vorgeschlagenen Montagewerkzeugs 40, 50, 60, 70, 80, 90 ist, die Verbindungsanordnung 10 einfacher und zuverlässiger zu gestalten. Die betreffende Verbindungsanordnung 10 enthält ein Insert 21 das mit einem Bauteil 11 verklebt ist. Für die Montage der Inserts 21 soll ein Werkzeug 40 verwendet werden. Das Werkzeug 40 soll die Luft zwischen Insert 21 und Bauteil 11 zuverlässig abführen. Außerdem soll das Werkzeug 40 das Insert 21 im Loch 13 des Bauteils 11 ausrichten.

Zur zuverlässigen Abführung der Luft soll das Werkzeug 40 mindestens zwei Luftauslässe besitzen. Davon soll sich zumindest ein Auslass 49 im stirnseitigen Bereich des Lochs 13 befinden. Zumindest ein zweiter Auslass 42 soll sich im bauteilseitigen Bereich des Lochs 13 befinden. Solange während des Einbringens des Klebemittels 31 zumindest einer der Auslässe 49, 42 nicht mit Klebemittel 31 verstopft ist, kann weiterhin Luft aus dem Zwischenraum 31 zwischen Insert 21 und Bauteil 11 abgeführt werden. Dies führt zu weniger Lufteinschlüssen und so zu einer höheren Prozesssicherheit bei der Montage des Inserts 21.

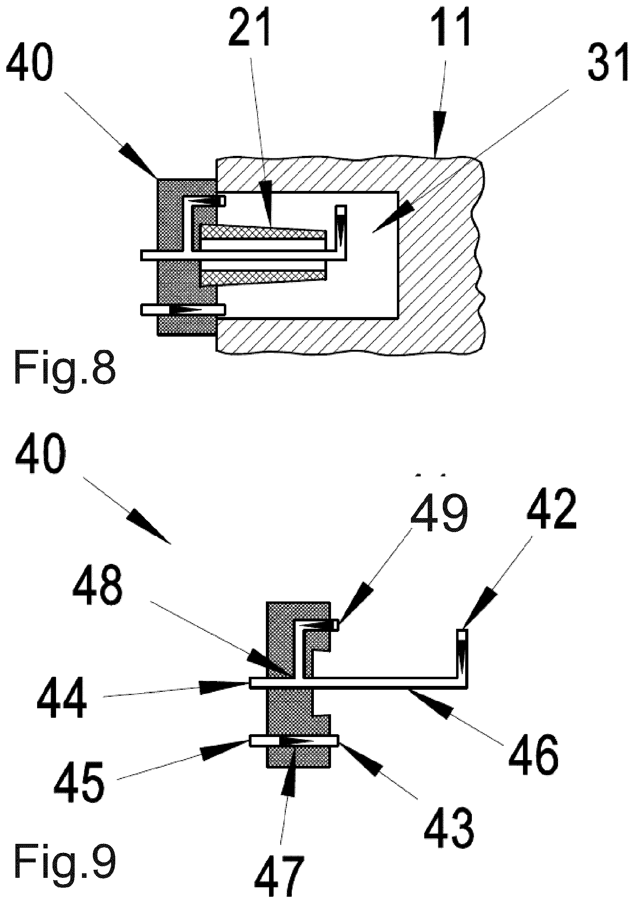

Fig. 8 stellt eine Ausführung des Werkzeugs 40 dar. Insert 21 und Werkzeug 40 befinden sich teilweise im Loch 13 des Bauteils 11. Zwischen Werkzeug 40, Bauteil 11 und Insert 21 entsteht so ein Zwischenraum 31 der mit einem Medium wie zum Beispiel Luft gefüllt ist. Vor dem Verkleben vom Bauteil 11 mit dem Insert 21 muss das Medium aus dem Zwischenraum 31 verdrängt werden. Ein Zwischenraum 31 zwischen Bauteil 11, Insert 21 und Werkzeug 40 ist mit Luft gefüllt. Zum Verkleben von Insert 21 mit Bauteil 11 soll der Zwischenraum 31 mit Klebemittel gefüllt werden. Dafür muss die Luft im Zwischenraum 31 entweichen. Hierfür besitzt das Werkzeug 40 Luftauslässe 49, 42. Nach dem Verkleben von Bauteil 11 und Insert 21 wird das Werkzeug 40 entfernt, sodass nur das Insert 21 im Bauteil 11 verbleibt.

Fig. 9 zeigt Details der Ausführungsvariante des Werkzeugs 40 aus Fig. 8. Das Werkzeug 40 besitzt einen ersten Auslass 49 und einen zweiten Auslass 42 für das zu verdrängende Medium. Das Medium wird durch einen Kanal 46 geführt und an einem Ablassstutzen 44 abgeführt. Das Klebemittel wird dem Werkzeug 40 am Einlassstutzen 45 zugeführt. Über einen Kanal 47 wird das Klebemittel im Werkzeug weitergeleitet und am Einlass 43 in den Bereich 31 zwischen Bauteil 11 und Insert 2) eingebracht. Das Werkzeug 40 besitzt zwei Auslässe 49, 42. Einer der Auslässe 49 befindet sich im stirnseitigen Bereich des Lochs 13. Der zweite Auslass 42 befindet sich im bauteilseitigen Bereich des Lochs 13. Die Auslässe 49, 42 sind über ein Ablassrohr 46 mit dem Ablassstutzen 44 verbunden. Die Auslässe 49, 42, das Ablassrohr 46 sowie der Ablassstutzen 44 dienen zum Ablassen der Luft aus dem Zwischenraum 31 zwischen Insert 21, Bauteil 11 und Werkzeug 40. Zudem besitzt das Werkzeug 40 einen Einlassstutzen 45 der über ein Einlassrohr 47 mit dem Einlass 43 verbunden ist. Über Einlassstutzen 45, Einlassrohr 47 und Einlass 43 wird das Klebemittel in den Zwischenraum 31 eingebracht.

Das Klebemittel kann auf unterschiedliche Arten in den Zwischenraum 31 eingebracht werden. Eine Variante ist das Einbringen des Klebemittels mittels Vakuuminfusions. Am Ablassstutzen 44 wird ein Unterdruck angelegt. Die im Zwischenraum 31 enthaltene Luft wird so größtenteils abgesaugt. Danach wird das Klebemittel über den Einlassstutzen 45 in den Zwischenraum 31 eingebracht. Die im Zwischenraum 31 verbliebene restliche Luft kann solange über die Auslässe 49, 42 abgesaugt werden, bis beide Auslässe 49, 42 mit Klebemittel verstopft sind.

Eine weitere Variante ist, das Klebemittel in den Zwischenraum 31 über den Einlasstuten 45 in den Zwischenraum 31 einzupressen. Beim Einpressen wird die Luft vom Klebemittel 31 verdrängt. Die Luft kann durch die beiden Auslässe 49, 42 entweichen. Erst wenn beide Auslässe 49, 42 mit Klebemittel verstopft sind, ist ein entweichen der Luft nicht mehr möglich. Bei dieser Variante muss das Werkzeug 40 am Bauteil 11 fixiert werden, da der Überdruck im Zwischenraum 31 das Werkzeug ansonsten aus dem Loch 13 herausgepresst würde.

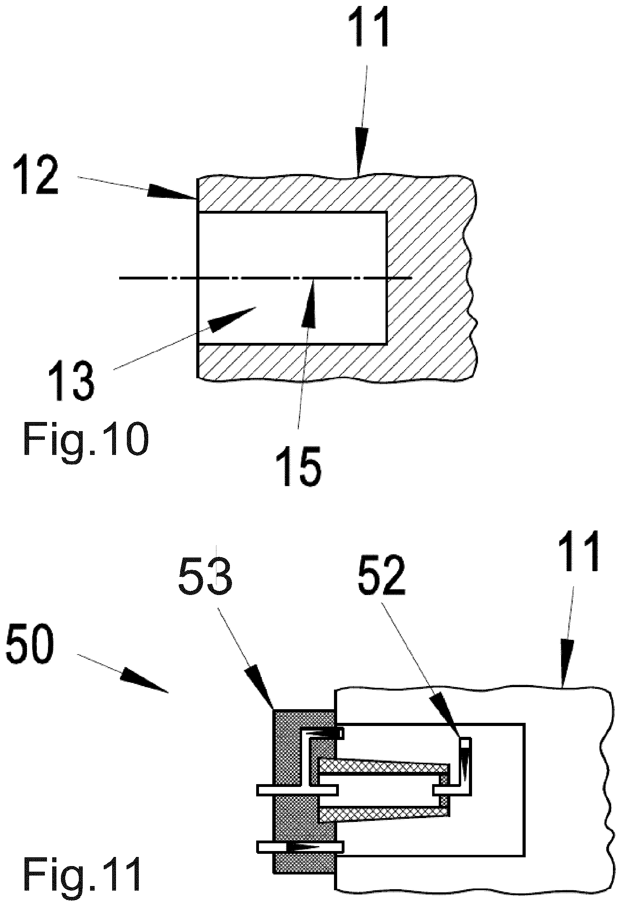

Fig. 10 stellt einen Schnitt durch das Bauteil 11 mit einem Loch 13 dar. Das Bauteil besitzt eine Stirnseite 12. Das Loch besitzt eine Längsachse 15. Das Loch 13 kann in einem beliebigen Winkel in das Bauteil 11 eingebracht werden. In Fig. 10 ist das Loch 13 senkrecht zur Stirnseite 12 eingebracht.

Fig. 11 stellt eine Ausführungsvariante 50 des Werkzeugs 40 dar. In dieser Variante besteht das Werkzeug 50 aus zwei Teilen. Das Werkzeug besteht aus einem ersten Teil 53 und einem zweiten Teil 52. Der erste Teil 53 befindet sich im Bereich der Rückseite 22 des Inserts 21. Der zweite Teil 52 befindet sich im Bereich der Vorderseite 23 des Inserts 21. Ein erster Auslass des Werkzeugs 40 befindet sich am ersten Teil 53, ein zweiter Auslass am zweiten Teil 52. Somit umfasst das stirnseitige Teil des Werkzeugs 53 einen Einlass 43 und den ersten Auslass 49. Der bauteilseitige Teil des Werkzeugs 52 umfasst den zweiten Auslass 42. Das Insert 21 ersetzt in dieser Variante einen Teil des Ablassrohrs 46. In dieser Variante wird nach dem Verkleben von Insert 21 mit Bauteil 11 nur der erste Teil 53 des Werkzeugs 40 von der Verbindungsanordnung 10 entfernt. Der zweite Teil 52 des Werkzeugs 40 verbleibt in der Verbindungsanordnung 10. Die Rückführung des Mediums übernimmt in dieser Ausführungsvariante der Insert 21.

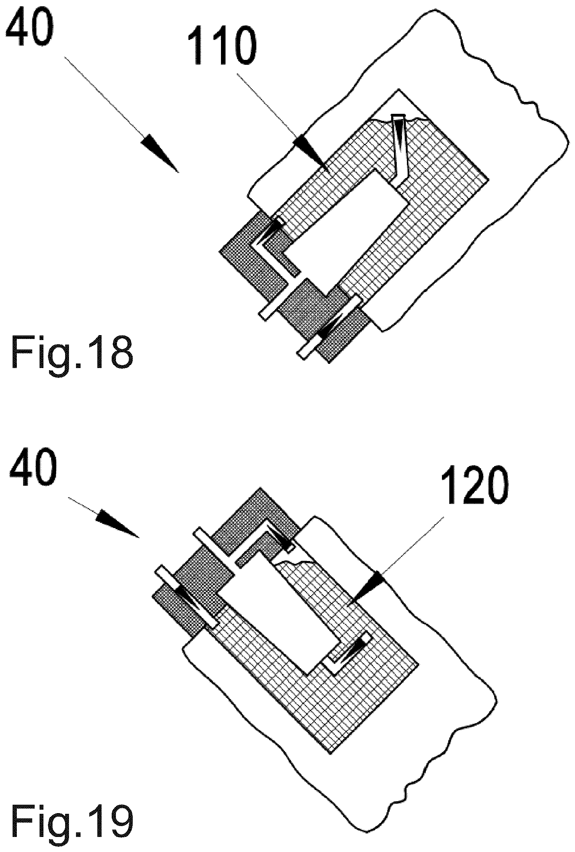

Fig. 12 stellt eine Ausführungsvariante einer fertig montierten Verbindungsanordnung 10 dar. In einem Loch, siehe Fig. 10 / 19, des Bauteils 11 befindet sich ein Insert 21 mit zumindest einer Seitenfläche 24. Das Insert 21 befindet sich mit der Vorderseite 23 voran im Bauteil 11. Klebemittel 31 verbindet Insert 21 und Bauteil 11 miteinander. Ein Teil des Werkzeugs 40 kann nach dem Verkleben im Loch, siehe Fig. 10 / 19 des Bauteils 11 verbleiben. Über eine Verschraubung ist das Insert 21 mit dem Bolzen 16 verbunden. Der Bolzen 16 befindet sich in einem Durchgangsloch in der Halterung 18. Die Halterung 18 liegt auf der Rückseite 22 des Inserts 21 auf. Über eine Mutter 17 wird eine Vorspannkraft auf die Verbindung 10 aufgebracht. Das Insert 21 befindet sich mit seiner Vorderseite 23 voran in einem Loch 13 eines Bauteils 11. An der Vorderseite 23 des Inserts 21 befindet sich ein Teil des Werkzeugs 40 welches für die Montage verwendet wird. Der Zwischenraum 31 zwischen Bauteil 11 und Seitenfläche 24 des Inserts 21 ist mit ausgehärtetem Klebemittel ausgefüllt. Der Teil des Werkzeugs 40 an der Rückseite 22 des Inserts 21 wurde entfernt. Auf der Rückseite 22 des Inserts 21 liegt eine Halterung 18 auf. In der Halterung 18 befindet sich ein Durchgangsloch für einen Gewindebolzen 16. Der Gewindebolzen 16 ist mit dem Insert 21 verschraubt. Über eine Mutter 17 wird eine Vorspannkraft auf die Verbindung 10 aufgebracht.

Bei den bisher beschriebenen Ausführungsvarianten verstopfen sich die Auslässe beim Verkleben gegenseitig. Sobald Klebemittel zum Beispiel den ersten Auslass 49 erreicht, wird das Klebemittel durch das Ablassrohr 46 in Richtung Ablassstutzen 44 weitergeleitet. Sobald das Klebemittel den Rohrabzweig 48 erreicht hat, verstopft das Klebemittel den zweiten Abfluss 42. Die im Zwischenraum 31 verbleibende Luft kann nicht weiter verdrängt werden.

Im Folgenden werden Ausführungsvarianten beschrieben, die das gegenseitige Verstopfen der Auslässe verhindern. Diese Varianten beinhalten ein Durchflussregulierungselement 62. Das Durchflussregulierungselement 62 lässt Luft entweichen. Die Fließgeschwindigkeit des Klebemittels wird vom Durchflussregulierungselement 62 verlangsamt oder dessen Durchfluss gestoppt.

Fig. 13 stellt eine Ausführungsvariante 60 des Werkzeugs 40 dar. Im Ablassrohr 46 befindet sich ein Durchflussregulierungselement 62. In dieser Variante ist das Durchflussregulierungselement 62 eine Membran. Durch diese Membran kann Luft entweichen, Klebemittel wird von ihr zurückgehalten. Das Werkzeug beinhaltet somit eine Membran 62 durch die das Medium entweichen kann. Das Klebemittel 31 kann die Membran 62 jedoch nicht durchdringen. Durch diese Variante wird erreicht, dass der Kanal am Auslass 49 nicht vom Klebemittel verschlossen wird, welches durch den zweiten Auslass 42 abgeführt wird. Wird an beiden Auslässen eine Membran 62 vorgesehen, ermöglicht dies eine lagenunabhängige Montage des Inserts. Klebemittel, welches durch den bauteilseitigen Auslass 42 abgesaugt wird, wird somit von der Membran zurückgehalten. Das Klebemittel kann nicht bis zum Rohrabzweig 48 gelangen. Somit kann das Klebemittel den ersten Auslass 49 nicht verstopfen. Wird zusätzlich eine weitere Membran zwischen erstem Auslass 49 und Rohrabzweig 48 vorgesehen, ist ein gegenseitiges Verstopfen der Auslässe ausgeschlossen.

Fig. 14 stellt eine Ausführungsvariante 70 des Werkzeugs 40 mit Durchflussregulierungselement 76 dar. In dieser Variante ist das Durchflussregulierungselement 76 ein Ablaufsiphon. Der Siphon zwischen erstem Abfluss 49 und Rohrabzweig 48 befindet sich auf der Höhe des zweiten Abflusses 42. Dadurch wird das Klebemittel 31 solange vom Rohrabzweig zurückgehalten, bis das Klebemittel den zweiten Abfluss 42 erreicht. Das Werkzeug beinhaltet somit einen Ablaufsiphon 76. Wird an beiden Auslässen ein Ablaufsiphon vorgesehen, ermöglicht dies eine lagenunabhängige Montage des Inserts.

Fig. 15 stellt eine Ausführungsvariante 80 des Werkzeugs mit Durchflussregulierungselement 81 dar. In dieser Variante ist das Durchflussregulierungselement 81 eine Drossel. Die Drossel reduziert die Fließgeschwindigkeit des Klebemittels. Das Klebemittel erreicht den Rohrabzweig 48 stark verzögert. Die im Zwischenraum 31 verbliebene Luft kann somit deutlich länger abgesaugt werden. Insofern beinhaltet das Werkzeug 80 eine Drossel 81. Die Drossel kann einschließlich aber nicht ausschließlich eine Reduzierung der Querschnittsfläche im Kanal 46 sein. Wird an beiden Auslässen eine Drossel vorgesehen, ermöglicht dies eine zumindest vorrübergehende lagenunabhängige Montage des Inserts.

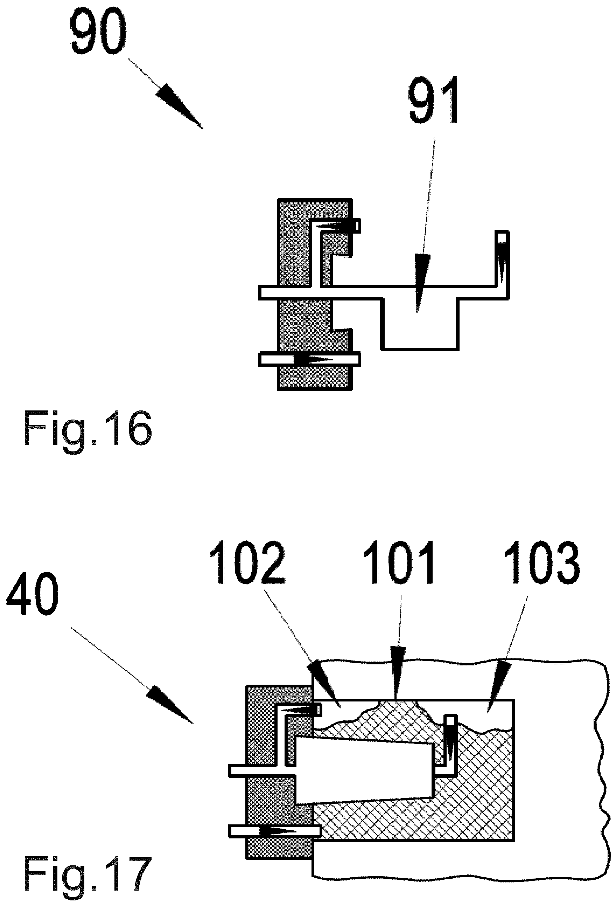

Fig. 16 stellt eine Ausführungsvariante 90 des Werkzeugs 40 mit Durchflussregulierungselement 91 dar. In dieser Variante ist das Durchflussregulierungselement 91 ein Überlaufbehälter. Das Klebemittel muss zuerst den Überlaufbehälter auffüllen, bevor es den Rohrabzweig 48 erreicht. Die im Zwischenraum 31 verbliebene Luft kann somit deutlich länger entweichen.. Das Werkzeug beinhaltet somit einen Überlaufbehälter 91. Wird an beiden Auslässen ein Überlaufbehälter vorgesehen, ermöglicht dies eine zumindest vorrübergehende lagenunabhängige Montage des Inserts.

Eine weitere Variante eines Durchflussregulierungselements ist zum Beispiel ein Luftablassventil. Die Mechanik des Luftablassventils ermöglicht das Entweichen von Luft, verhindert aber den Durchfluss von Klebemittel.

Fig. 17 stellt das Ende des Verklebeprozesses dar. Der Zwischenraum 31 zwischen Insert 21 und Bauteil 11 ist fast vollständig mit Klebemittel gefüllt. Im mittleren Bereich des Lochs 13 hat sich ein Verschluss 101 gebildet. Das Klebemittel trennt den verbleibenden Zwischenraum 31 in zwei Teile 102, 103 auf. Aufgrund der zwei Absaugungen kann die in den Zwischenräumen 102, 103 verbleibende Luft aber immer noch entweichen. Der Zwischenraum 31 kann auf diese Weise vollständig mit Klebemittel ausgefüllt werden. Somit wird durch den Einlass 49 im Werkzeug 40 Klebemittel in den Bereich zwischen Insert 21 und Bauteil 11 eingebracht. An der Oberseite des Lochs 13 bildet das Klebemittel 31 einen Verschluss 101. Auf diese Weise entstehen zwei Lufteinschlüsse 102 und 103. Beide Lufteinschlüsse können weiter mit Klebemittel verfüllt werden, da die enthaltene Luft durch die beiden Auslässe des Werkzeugs 40 entweichen kann.

Fig. 18 und 19 stellen die Möglichkeit der lageunabhängige Montage durch die Erfindung dar. In Fig. 18 ist die Stirnseite 12 des Bauteils 11 nach unten gekippt. In dieser Position verstopft der stirnseitige Auslass 49 bereits zu Beginn des Verklebeprozesses. Durch den bauteilseitigen Auslass 42 kann die Luft aber bis zum vollständigen Auffüllen des Zwischenraums 31 mit Klebemittel zuverlässig entweichen. Die rückseitige Auslassöffnung ermöglicht ein vollständiges Auffüllen des Bereichs zwischen Insert 21 und Bauteil 11 mit Klebemittel 110.

In Fig. 19 ist die Stirnseite 12 des Bauteils 11 nach oben gekippt. In dieser Position verstopft der bauteilseitige Auslass 42 bereits zu Beginn des Verklebeprozesses. Durch den stirnseitigen Auslass 49 kann die Luft aber bis zum vollständigen Auffüllen des Zwischenraums 31 mit Klebemittel zuverlässig entweichen. Das Werkzeug 40 ermöglicht ein vollständiges Auffüllen des Bereichs zwischen Insert 21 und Bauteil 11 mit Klebemittel 120.

Fig. 18 und 19 zeigen, dass mit dem Werkzeug 40 eine lageunabhängige Montage der Verbindungsanordnung 10 möglich ist. Dabei ist zu beachten, dass in den Auslasskanälen die Vorrichtungen aus Fig. 6 bis Fig. 9 vorzusehen sind.

Eine weitere Ausführungsvariante des Werkzeugs 40 dient zusätzlich zur Entlüftung auch der Zentrierung bzw. der Ausrichtung des Inserts 21 im Bauteil 11. Dadurch kann zum Beispiel der Abstand zwischen Insert 21 und Innenwandung der Bohrung 13 genau eingestellt werden. Außerdem kann damit die Position zwischen mehreren, nebeneinander angeordneten Inserts 21 festgelegt werden. Dies kann zur Herstellung eines planaren Verbindungsflansches aus einer Vielzahl von Inserts genutzt werden.

Eine weitere Ausführungsvariante des Werkzeugs 40 dient zusätzlich zur Entlüftung auch zum Erwärmen der Verbindungsanordnung 10. Ein Heizelement im Werkzeug 40 erwärmt die Verbindungsanordnung 10. Dies ermöglicht eine definierte Temperierung des Klebemittels während der Einbringung, ein schnelleres Aushärten sowie ein Tempern der Verbindungsanordnung 10.

### Bezugszeichenliste

- 10: Befestigungsvorrichtung
- 11: Bauteil
- 12: stirnseitige Hälfte des Lochs
- 13: Loch des Bauteils
- 14: Qerschnittsflächen des Lochs des Bauteils
- 15: Längsachse des Lochs
- 16: Bolzen
- 17: Mutter
- 18: Halterung
- 21: Insert
- 22: Rückseite des Inserts
- 23: Vorderseite des Inserts
- 24: Seitenfläche des Inserts
- 31: Klebemittel
- 40: Werkzeug
- 41: Entkopplungselement
- 42: Lufteinlass / Luftauslass
- 43: Einlassbereich zwischen Insert und Bauteil
- 44: Ablassstutzen des Werkzeugs
- 45: Einlassstutzen des Werkzeugs
- 46: Kanal im Werkzeug / Ablassrohr
- 47: Kanal im Werkzeug / Einlassrohr
- 48: Rohrabzweig
- 49: Lufteinlass / Luftauslass
- 50: Werkzeug
- 51: Trennschicht des Entkopplungselements
- 52: Bauteilseitiges Teil / Zweites Teil des Werkzeugs
- 53: Stirnseitiges Teil / Erstes Teil des Werkzeugs
- 60: Werkzeug
- 61: Risse zwischen zwei Bereichen der Konstruktion
- 62: Durchflussregulierungselement / Membran
- 70: Werkzeug
- 71: Geometrischer Schwerpunkt des Lochs
- 72: Abstand des Entkopplungselements zur Längsachse
- 73: Außenradius des Inserts
- 74: Abstand der Seitenfläche des Inserts vom Bauteil
- 75: Befestigungsbereich des Inserts
- 76: Durchflussregulierungselement / Ablaufsiphon des Werkzeugs
- 80: Werkzeug
- 81: Durchflussregulierungselement / Drossel des Werkzeugs
- 90: Werkzeug
- 91: Durchflussregulierungselement / Überlaufbehälter des Werkzeugs
- 101: Klebemittelverschluss
- 102: Lufteinschlüsse
- 103: Lufteinschlüsse
- 110: Klebemittel
- 120: Klebemittel

## Patentansprüche

1. Anordnung (10) zum Befestigen eines Bauteils (11) mittels eines Inserts (21), insbesondere zum Befestigen eines Gewindebolzens in einem Rotorblatt einer Windkraftanlage, wobei die Anordnung (10) zumindest das Bauteil (11), das Insert (21), ein Klebemittel (31) und mindestens ein Entkopplungselement (41) aufweist, wobei das Bauteil (11) in einer befestigungsseitigen Stirnseite (12) mindestens ein Loch (13) aufweist, das zur Aufnahme des Inserts (21) ausgebildet ist, das mit einer Vorderseite (23) voran in das Loch (13) eingesetzt ist, wobei ein Zwischenraum zwischen dem Insert (21) und der Innenwandung des Lochs (13) zumindest teilweise mit dem Klebemittel (31) ausgefüllt ist, wobei zwischen dem Insert (21) und der Innenwandung mindestens das Entkopplungselement (41) zur Reduzierung von Spannungsspitzen eingesetzt ist, dessen Steifigkeit geringer als eine Steifigkeit des ausgehärteten Klebemittels (31) ist, **dadurch gekennzeichnet, dass** das Loch (13) im Bauteil (11) eine Längsachse (15) aufweist, die Längsachse (15) durch den geometrischen Schwerpunkt (71) des Lochs (13) verläuft, und Teile des Entkopplungselements (41) einen Abstand (72) zur Längsachse (15) aufweisen, der größer ist als der arithmetisch mittlere Außenradius (73) des vorderseitigen Drittels des Inserts (21), sodass das Entkopplungselement (41) eine Vorderseite (23) des Inserts (21) abschirmt und umgelenkte Kräfte an anderen Stellen in das Insert (21) eingeleitet werden.

2. Anordnung nach Anspruch 1, **dadurch gekennzeichnet, dass** ein Werkzeug (40, 50, 60, 70, 80, 90) in der Anordnung (10) so eingesetzt ist, dass bei der Montage ein Lufteinschluss zwischen dem Insert (21) und dem Bauteil (11) reduzierbar ist.

3. Anordnung nach Anspruch 1 oder 2, **dadurch gekennzeichnet, dass** die Steifigkeit des Entkopplungselements (41) um mindestens 20% geringer ist als die durchschnittliche Steifigkeit des ausgehärteten Klebemittels (31), und/oder das Loch (13) im Bauteil (11) Querschnittsflächen (14) besitzt, die senkrecht zur Längsachse (15) des Lochs (13) ausgerichtet sind und die Oberfläche des Entkopplungselements (41) größer ist als 10% der durchschnittlichen Querschnittsfläche (14) des Lochs (13).

4. Anordnung nach einem der vorherigen Ansprüche, **dadurch gekennzeichnet, dass** die geringere Steifigkeit des Entkopplungselements (41) durch ein Material mit mindestens 20% geringerem Elastizitätsmodul als dem ausgehärteten Klebemittel (31) erreicht wird, und/oder die geringere Steifigkeit des Entkopplungselements (41) durch eine Aussparung des Klebemittels (31) erreicht wird, und/oder die geringere Steifigkeit des Entkopplungselements (41) durch eine Trennschicht (51) mit reduzierter Anhaftung zwischen zwei Bereichen der Konstruktion erreicht wird, und/oder die geringere Steifigkeit des Entkopplungselements (41) durch die Provokation von Rissen (61) zwischen zwei Bereichen der Konstruktion erreicht wird.

5. Anordnung nach einem der vorherigen Ansprüche, **dadurch gekennzeichnet, dass** das Entkopplungselement (41) aus mindestens einem Material besteht, und/oder das Entkopplungselement (41) einteilig oder mehrteilig ist, und/oder das Entkopplungselement (41) ein Hohlelement ist, und/oder das Entkopplungselement (41) ein Hohlraum ist.

6. Anordnung nach einem der vorherigen Ansprüche, **dadurch gekennzeichnet, dass** das Insert (21) zumindest eine Seitenfläche (24) besitzt, die einen Abstand (74) zum Bauteil (11) aufweist und der Befestigungsbereich (75) des Insert (21) derjenige Teil ist, der sich im Bauteil (11) befindet und der arithmetisch mittlere Abstand (74) zwischen der Seitenfläche (24) und dem Bauteil (11) im vorderen Zehntel des Befestigungsbereichs (75) des Insert (21) größer ist als 10% des arithmetisch mittleren Radius (73) des Befestigungsbereichs (75) des Insert (21).

7. Anordnung nach einem der vorherigen Ansprüche, **dadurch gekennzeichnet, dass** das Bauteil (11) ein Rotorblatt für Windenergieanlagen ist.

8. Verfahren zum Befestigen eines Bauteils (11) mittels einer Anordnung (10) mit einem Insert (21) und einem Entkopplungselement (41) nach einem der vorgenannten Ansprüche, mit den Arbeitsschritten:
- Bereitstellen des Bauteils (11) mit Loch (13);
- Bereitstellen des Inserts (21);
- Bereitstellen des Entkopplungselements (41);
- Einsetzen des Entkopplungselements (41) in das Loch (13) des Bauteils (11);
- Einsetzen des Inserts (21) in das Bauteil (11);
- Einbringen eines Klebemittels (31);
- Aushärten des Klebemittels (31).

9. Verfahren nach Anspruch 8, **dadurch gekennzeichnet, dass** ein Werkzeug (40, 50, 60, 70, 80, 90) so eingesetzt wird, dass bei der Montage ein Lufteinschluss zwischen dem Insert (21) und dem Bauteil (11) reduziert wird.

10. Verfahren nach Anspruch 9, **dadurch gekennzeichnet, dass** ein Zwischenraum zwischen dem Insert (21) und der Innenwandung des Lochs (13) entsteht der mit dem Klebemittel (31) gefüllt wird, wobei Luft zur Verklebung verdrängt werden muss und die verdrängte Luft durch mindestens einen Auslass im Bereich der stirnseitigen (12) Hälfte des Lochs (13) und durch mindestens einen Auslass im Bereich der bauteilseitigen Hälfte des Lochs (13) mittels des Werkzeugs (40, 50, 60, 70, 80, 90) entweicht.

11. Verfahren nach einem der Ansprüche 8 bis 10, **dadurch gekennzeichnet, dass** das Bauteil (11) ein Rotorblatt für Windenergieanlagen ist.

12. Set, umfassend eine Anordnung nach Anspruch 2 und ein Werkzeug (40, 50, 60, 70, 80, 90) zur Luftextraktion, wobei das Werkzeug (40, 50, 60, 70, 80, 90) mindestens zwei Auslässe (49,42) für zu verdrängende Luft beim Einführen des Klebemittels (31) besitzt, wobei mindestens ein erster Auslass (49) einem Bereich der stirnseitigen (12) Hälfte des Lochs (13) und mindestens ein zweiter Auslass (42) einem Bereich der bauteilseitigen Hälfte des Lochs (13) zuordenbar ist, **dadurch gekennzeichnet, dass** das Werkzeug (40, 50, 60, 70, 80, 90) zumindest ein Durchflussregulierungselement (62, 76, 81, 91) beinhaltet, wobei das Durchflussregulierungselement (62, 76, 81, 91) zumindest eine Membran (62), und / oder einen Ablaufsiphon (76) und / oder eine Drossel (81) und /oder einen Überlaufbehälter (91) und /oder ein Luftablassventil beinhaltet.

13. Set nach Anspruch 12, **dadurch gekennzeichnet, dass** das Werkzeug das Insert (21) im Loch (13) zentriert, und / oder das Werkzeug (40, 50, 60, 70, 80, 90) das Insert (21) im Loch (13) ausrichtet, und / oder das Werkzeug (40, 50, 60, 70, 80, 90) das Insert (21) zum Bauteil (13) ausrichtet, und / oder das Werkzeug (40, 50, 60, 70, 80, 90) das Insert (21) zu anderen Inserts ausrichtet.

14. Set nach einem der vorherigen Ansprüche 12 bis 13, **dadurch gekennzeichnet, dass** das Werkzeug (40, 50, 60, 70, 80, 90) ein Heizelement beinhaltet.

15. Set nach einem der vorherigen Ansprüche 12 bis 14, **dadurch gekennzeichnet, dass** das Werkzeug (40, 50, 60, 70, 80, 90) aus mindestens einem Material besteht, und / oder das Werkzeug (40, 50, 60, 70, 80, 90) einteilig oder mehrteilig ist.

16. Set nach einem der vorherigen Ansprüche 12 bis 15, **dadurch gekennzeichnet, dass** das Bauteil (11) ein Rotorblatt für Windenergieanlagen ist.

## Claims

1. Arrangement (10) for fastening a component (11) by means of an insert (21), in particular for fastening a threaded bolt inside a rotor blade of a wind turbine, whereby the arrangement (10) comprises at least the component (11), the insert (21), an adhesive (31) and at least one decoupling element (41), said component (11) having in an end face (12) on the fastening side at least one hole (13) designed to receive the insert (21), which is inserted into the hole (13) with a front face (23) first, an intermediate space between the insert (21) and the inner wall of the hole (13) being at least partially filled with the adhesive (31), whereby the decoupling element (41) for reducing stress peaks is inserted between the insert (21) and the inner wall whose stiffness is less than a stiffness of the cured adhesive (31), **characterized in that** the hole (13) in the component (11) has a longitudinal axis (15), said longitudinal axis (15) passes through the geometrical centre (71) of the hole (13), and parts of the decoupling element (41) have a distance (72) to the longitudinal axis (15) which is greater than the arithmetical mean outer radius (73) of the front third of the insert (21), so that the decoupling element (41) shields one front side (23) of the insert (21) and deflected forces are introduced into the insert (21) at other points.

2. Arrangement according to claim 1, **characterized in that** a tool (40, 50, 60, 70, 80, 90) is inserted in the arrangement (10) in such a way that during air entrapment between the insert (21) and the component (11) can be reduced during assembly.

3. Arrangement according to claim 1 or 2, **characterized in that** the stiffness of the decoupling element (41) is at least 20% less than the average stiffness of the cured adhesive (31), and/or the hole (13) in the component (11) has cross-sectional surfaces (14) aligned vertical to the longitudinal axis (15) of the hole (13) and the surface of the decoupling element (41) is larger than 10% of the average cross-sectional surface (14) of the hole (13).

4. Arrangement according to one of the previous claims, **characterized in that** the lower stiffness of the decoupling element (41) is attained by a material with a modulus of elasticity at least 20% lower than the cured adhesive (31), and/or the lower stiffness of the decoupling element (41) is attained by an omission in the adhesive (31), and/or the lower stiffness of the decoupling element (41) is attained by a separating layer (51) with reduced adhesion between two areas of the construction, and/or the lower stiffness of the decoupling element (41) is attained by the provocation of cracks (61) between two areas of the construction.

5. Arrangement according to one of the previous claims, **characterized in that** the decoupling element (41) consists of at least one material, and/or the decoupling element (41) is one-part or multi-part, and/or the decoupling element (41) is a hollow element, and/or the decoupling element (41) is a hollow space.

6. Arrangement according to one of the previous claims, **characterized in that** the insert (21) has at least one side face (24) having a distance (74) from the component (11), and the fastening area (75) of the insert (21) is that part which is located in the component (11), and the arithmetical mean distance (74) between the side face (24) and the component (11) in the front tenth of the fastening area (75) of the insert (21) is greater than 10% of the arithmetical mean radius (73) of the fastening area (75) of the insert (21).

7. Arrangement according to one of the preceding claims, **characterized in that** the component (11) is a rotor blade for wind turbines.

8. Method for fastening a component (11) by means of an arrangement with an insert (21) and a decoupling element (41) according to one of the preceding claims, with the work steps:
- Provision of the component (11) with hole (13);
- Provision of the insert (21);
- Provision of the decoupling element (41);
- Insertion of the decoupling element (41) into the hole (13) of the component (11);
- Insertion of the insert (21) into the component (11);
- Emplacing of an adhesive (31);
- Curing of the adhesive (31).

9. Method according to claim 8, **characterized in that** a tool (40, 50, 60, 70, 80, 90) is used in such a way that air entrapment between the insert (21) and the component (11) is reduced during assembly.

10. Method according to claim 9, **characterized in that** an intermediate space is created between the insert (21) and the inner wall of the hole (13) which is filled with an adhesive (31) whereby air must be displaced for bonding, and the displaced air escapes through at least one outlet in the area of that half of the hole (13) on the end face side (12) and through at least one outlet in the area of that half of the hole (13) on the component side by means of the tool (40, 50, 60, 70, 80, 90).

11. Arrangement according to one of claims 8 to 10, **characterized in that** the component (11) is a rotor blade for wind turbines.

12. Set, comprising an arrangement according to claim 2 and a tool (40, 50, 60, 70, 80, 90), whereby said tool (40, 50, 60, 70, 80, 90) has at least two outlets (49, 42) for the air to be displaced during the insertion of the adhesive (31), where at least one first outlet (49) can be assigned to an area of that half of the hole (13) on the end face side (12) and at least one second outlet (42) can be assigned to an area of that half of the hole (13) on the component side, **characterized in that** said tool (40, 50, 60, 70, 80, 90) contains at least one flow regulation element (62, 76, 81, 91), whereby the flow regulation element (60) contains at least one membrane (62), and/or at least one discharge siphon (76), and/or a restrictor (81), and/or an overflow container (91) and/or an air outflow valve.

13. Set according to claim 12, **characterized in that** the tool centres the insert (21) in the hole (13), and/or the tool (40, 50, 60, 70, 80, 90) aligns the insert (21) in the hole (13), and/or the tool (40, 50, 60, 70, 80, 90) aligns the insert (21) to the component (13), and/or the tool (40, 50, 60, 70, 80, 90) aligns the insert (21) to other inserts.

14. Set according to one of the previous claims 12 to 13, **characterized in that** the tool (40, 50, 60, 70, 80, 90) contains a heating element.

15. Set according to one of the previous claims 12 to 14, **characterized in that** the tool (40, 50, 60, 70, 80, 90) consists of at least one material, and/or the tool (40, 50, 60, 70, 80, 90) is one-part or multi-part.

16. Set according to one of the previous claims 12 to 15, **characterized in that** the component (11) is a rotor blade for wind turbines.

## Revendications

1. Agencement (10) pour fixer un composant (11) au moyen d'un insert (21), notamment pour fixer un boulon fileté dans une pale de rotor d'une éolienne, sachant que l'agencement (10) présente au moins le composant (11), l'insert (21), un moyen adhésif (31) et au moins un élément de découplage (41), sachant que le composant (11) présente dans une face frontale (12) côté fixation au moins un trou (13) qui est conçu pour accueillir l'insert (21) qui est inséré dans le trou (13) avec une face avant (23) en premier, sachant qu'un espace intermédiaire entre l'insert (21) et la paroi intérieure du trou (13) est rempli au moins partiellement par le moyen adhésif (31), sachant qu'est inséré entre l'insert (21) et la paroi intérieure au moins l'élément de découplage (41) pour réduire les pics de tension dont la rigidité est inférieure à une rigidité du moyen adhésif (31) durci, **caractérisé en ce que** le trou (13) dans le composant (11) présente un axe longitudinal (15), que l'axe longitudinal (15) s'étend à travers le point de gravité (71) géométrique du trou (13), et que des parties de l'élément de découplage (41) présentent un écart (72) par rapport à l'axe longitudinal (15), qui est supérieur au rayon extérieur (73) moyen arithmétique du tiers de l'insert (21), côté avant de sorte que l'élément de découplage (41) blinde un côté avant (23) de l'insert (21) et que des forces déviées sont transmises à l'insert (21) à d'autres endroits.

2. Agencement selon la revendication 1, **caractérisé en ce qu'**un outil (40, 50, 60, 70, 80, 90) est inséré dans l'agencement (10) de telle sorte qu'une inclusion d'air entre l'insert (21) et le composant (11) est réductible lors du montage.

3. Agencement selon la revendication 1 ou 2, **caractérisé en ce que** la rigidité de l'élément de découplage (41) est au moins 20 % inférieure à la rigidité moyenne du moyen adhésif (31) durci et/ou que le trou (13) dans le composant (11) possède des surfaces transversales (14) qui sont orientées perpendiculairement à l'axe longitudinal (15) du trou (13) et que la surface de l'élément de découplage (41) est supérieure à 10 % de la surface transversale (14) moyenne du trou (13).

4. Agencement selon l'une des revendications précédentes, **caractérisé en ce que** la rigidité plus faible de l'élément de découplage (41) est obtenue au moyen d'un matériau avec un module d'élasticité au moins inférieur de 20 % au moyen adhésif (31) durci, et/ou que la rigidité plus faible de l'élément de découplage (41) est obtenue par un évidement du moyen adhésif (31), et/ou que la rigidité plus faible de l'élément de découplage (41) est obtenue par une couche de séparation (51) avec adhérence réduite entre deux zones de la construction, et/ou que le rigidité plus faible de l'élément de découplage (41) est obtenue par la réalisation de fentes (61) entre deux zones de la construction.

5. Agencement selon l'une des revendications précédentes, **caractérisé en ce que** l'élément de découplage (41) est constitué d'au moins un matériau, et/ou que l'élément de découplage (41) est en une seule partie ou en plusieurs parties, et/ou que l'élément de découplage (41) est un élément creux, et/ou que l'élément de découplage (41) est un espace creux.

6. Agencement selon l'une des revendications précédentes, **caractérisé en ce que** l'insert (21) possède au moins une surface latérale (24) qui présente un écart (74) par rapport au composant (11) et que la zone de fixation (75) de l'insert (21) est la partie qui se trouve dans le composant (11) et que l'écart (74) moyen arithmétique entre la surface latérale (24) et le composant (11) est supérieur, dans le dixième avant de la zone de fixation (75) de l'insert (21), de 10 % au rayon (73) moyen arithmétique de la zone de fixation (75) de l'insert (21).

7. Agencement selon l'une des revendications précédentes **caractérisé en ce que** le composant (11) est une pale de rotor pour éoliennes.

8. Procédé de fixation d'un composant (11) au moyen d'un agencement (10) avec un insert (21) et un élément de découplage (41) selon l'une des revendications précédentes, avec les étapes de travail suivantes :
- fourniture du composant (11) avec trou (13) ;
- fourniture de l'insert (21) ;
- fourniture de l'élément de découplage (41) ;
- insertion de l'élément de découplage (41) dans le trou (13) du composant (11) ;
- insertion de l'insert (21) dans le composant (11) ;
- application du moyen adhésif (31) ;
- durcissement du moyen adhésif (31).

9. Procédé selon la revendication 8, **caractérisé en ce qu'**un outil (40, 50, 60, 70, 80, 90) est inséré de telle sorte qu'une inclusion d'air entre l'insert (21) et le composant (11) est réduite lors du montage.

10. Procédé selon la revendication 9, **caractérisé en ce qu'**apparaît un espace intermédiaire entre l'insert (21) et la paroi intérieure du trou (13), qui est rempli (31) de moyen adhésif, sachant que l'air doit être refoulé pour le collage et que l'air refoulé s'échappe par au moins une sortie dans la zone de la moitié du trou (13) côté frontal (12) et par au moins une sortie dans la zone de la moitié du trou (13) côté composant, au moyen de l'outil (40, 50, 60, 70, 80, 90).

11. Procédé selon l'une des revendications 8 à 10, **caractérisé en ce que** le composant (11) est une pale de rotor pour éoliennes.

12. Kit comprenant un agencement selon la revendication 2, et un outil (40, 50, 60, 70, 80, 90) pour l'extraction de l'air, sachant que l'outil (40, 50, 60, 70, 80, 90) possède au moins deux sorties (49, 42) pour l'air à refouler lors de l'introduction du moyen adhésif (31), sachant qu'au moins une première sortie (49) est associable à une zone de la moitié du trou (13) côté frontal (12) et au moins une seconde sortie (42) est associable à une zone de la moitié du trou (13) côté composant, **caractérisé en ce que** l'outil (40, 50, 60, 70, 80, 90) comprend au moins un élément de régulation de débit (62, 76, 81, 91), sachant que l'élément de régulation de débit (62, 76, 81, 91) contient au moins une membrane (62) et/ou un siphon d'écoulement (76) et/ou un étrangleur (81) et/ou un bac de trop-plein (91) et/ou une soupape de décharge d'air.

13. Kit selon la revendication 12, **caractérisé en ce que** l'outil centre l'insert (21) dans le trou (13), et/ou que l'outil (40, 50, 60, 70, 80, 90) oriente l'insert (21) dans le trou (13), et/ou que l'outil (40, 50, 60, 70, 80, 90) oriente l'insert (21) par rapport au composant (13), et/ou que l'outil (40, 50, 60, 70, 80, 90) oriente l'insert (21) par rapport aux autres inserts.

14. Kit selon l'une des revendications précédentes 12 à 13, **caractérisé en ce que** l'outil (40, 50, 60, 70, 80, 90) contient un élément chauffant.

15. Kit selon l'une des revendications précédentes 12 à 14, **caractérisé en ce que** l'outil (40, 50, 60, 70, 80, 90) se compose d'au moins un matériau, et/ou que l'outil (40, 50, 60, 70, 80, 90) est en une seule partie ou en plusieurs parties.

16. Procédé selon l'une des revendications précédentes 12 à 15, **caractérisé en ce que** le composant (11) est une pale de rotor pour éoliennes.
